# FASCICULE DE BREVET EUROPEEN

(11) **EP 2 739 472 B1**
(45) Date de publication et mention de la délivrance du brevet: **27.02.2019**
(21) Numéro de dépôt: 12750458.7
(22) Date de dépôt: 31.07.2012
(51) Int. Cl.: B32B 17/10, C03C 27/12

(54) **PROCÉDÉ DE FABRICATION D'UN VITRAGE A EFFET DECORATIF**
VERFAHREN ZUR HERSTELLUNG EINER DEKORATIVEN VERGLASUNG
PROCESS FOR THE MANUFACTURE OF A DECORATIVE GLAZING

(30) Priorité: 04.08.2011 FR 1157161
(43) Date de publication de la demande: 11.06.2014
(60) Demande divisionnaire: 14184969.5
(73) Titulaire: Saint-Gobain Glass France, 92400 Courbevoie (FR)
(72) Inventeur: BAQUET, Erwan, F-60200 Compiegne (FR); LEVASSEUR, Fabien, F-59200 Tourcoing (FR); GOUY, Aurélien, F-60150 Plessis Brion (FR); OUTIN, Jean-François, 78670 Vilennes Sur Seine (FR)
(74) Mandataire: Saint-Gobain Recherche
(86) Numéro de dépôt international: PCT/FR2012/051806
(87) Numéro de publication internationale: WO 2013/017797

(56) Documents cités:
- EP-A1- 0 238 301
- WO-A1-03/014033
- WO-A1-2009/039053
- DE-A1- 4 447 171
- DE-U1- 8 903 186
- DE-U1- 9 407 401
- FR-A1- 2 171 929
- US-A- 5 536 347
- US-A1- 2007 034 317
- US-A1- 2008 014 398

## Description

La présente invention concerne un vitrage, notamment à effet décoratif, combinant à la fois l'esthétique due à l'aspect en trois dimensions de certains revêtements textiles et la stabilité dans le temps des substrats verriers. Elle concerne également un procédé de fabrication de tels vitrages.

On connaît différents types de vitrages qui sont constitués de produits feuilletés, et qui comportent un élément décoratif qui est encapsulé entre deux feuilles de verre.

On a ainsi proposé un assemblage constitué d'une "feuille" de pierre dont chacune des faces est liée à une feuille de verre par un film intercalaire.

On a également proposé un assemblage dans lequel la feuille de pierre était remplacée par une image imprimée.

On a enfin proposé, dans le brevet JP 2001226154, un vitrage feuilleté constitué d'une couche de laine ou de fibres qui est prise en sandwich entre deux plaques de verre. Un tel vitrage est destiné à assurer deux fonctions, à savoir d'une part filtrer les rayons ultraviolets et, d'autre part, prévenir l'éclatement des feuilles de verre en cas de choc.

On connaît également par ailleurs certains revêtements textiles dont le caractère esthétique provient de leur structure même, c'est-à-dire que leur épaisseur entre pour une bonne part dans leur aspect esthétique. On parlera ci-après de produit textiles trois dimensions ou 3D.

Ces revêtements textiles sont particulièrement intéressants dans la mesure où leur aspect esthétique peut prendre des formes extrêmement variées et donner à des vitrages un aspect en trois dimensions remarquable.

Aucun des vitrages feuilletés mentionnés précédemment ne permet de mettre en évidence l'aspect 3D de tels revêtements textiles.

L'une des difficultés rencontrées lorsque l'on souhaite constituer un vitrage feuilleté encapsulant des revêtements textiles 3D est que ces derniers possèdent une texture particulièrement fragile qui, lorsqu'on la soumet aux méthodes classiques d'encapsulage, a pour effet de s'écraser sous l'effet de la dépression à laquelle on est contraint de les soumettre, si bien qu'ils perdent ainsi leur caractère 3D qui constitue l'essentiel de leur intérêt sur le plan de l'esthétique.

La présente invention a pour but de proposer un procédé permettant d'éviter un tel écrasement et d'assurer la réalisation de vitrages feuilletés comportant à coeur un matériau textile de type 3D qui conserve son aspect tridimensionnel après l'opération d'encapsulage.

La présente invention a ainsi pour objet un procédé de fabrication d'un vitrage de type feuilleté comportant une âme dont au moins l'une des faces est liée à un substrat verrier par un intercalaire de feuilletage constitué d'un EVA, caractérisé en ce qu'il comporte :
- une étape d'assemblage d'un ensemble constitué dudit substrat verrier et dudit intercalaire de feuilletage sur une âme constituée d'un revêtement textile de type 3D,
- une étape formée de plusieurs phases comprenant une phase de chauffage, une phase de maintien en température, et une phase de refroidissement dudit ensemble et, simultanément, une phase de mise en dépression, une phase de maintien en dépression et une phase de remise à la pression ambiante suivant un profil température/pression spécifique tel que la mise en dépression s'effectue pendant au moins une partie de la phase de chauffage et en ce que la phase de chauffage est assurée avec une pente de montée en température de l'ordre de 2,7°C/min. Ensuite la phase de maintien en température pourra s'effectuer entre 100°C et 140°C et préférentiellement aux environs de 130°C. La phase de refroidissement pourra être assurée avec une pente de descente en température de l'ordre de 2,7°C/min. La phase de mise en dépression pourra être assurée avec une pente de descente en pression de l'ordre de 0,8.10⁴ Pa/min et la phase de maintien en dépression pourra s'effectuer entre 0,5.10⁴ Pa et 2.10⁴ Pa et préférentiellement aux environs de 10⁴ Pa. Par ailleurs, la phase de remontée à la pression ambiante pourra être assurée avec une pente de l'ordre de 0,8.10⁴ Pa/min. La phase de mise en dépression pourra commencer simultanément à la phase de chauffage et la phase de remontée à la pression ambiante pourra commencer à la fin de la phase de chauffage. La phase de mise en dépression pourra également commencer sensiblement au milieu de la phase de chauffage.

La présente invention est particulièrement intéressante en ce qu'elle permet de disposer d'un vitrage dont l'aspect esthétique est extrêmement proche de celui procuré par le matériau textile lui-même, tout en bénéficiant de la protection assurée par les parois de verre contre la poussière et les agressions diverses.

Dans une variante de l'invention on peut faire appel à un intercalaire de feuilletage apte à filtrer les rayons ultra-violets, si bien que ce dernier préserve le matériau textile des agressions solaires susceptibles de modifier dans le temps ses qualités esthétiques.

On décrira ci-après, à titre d'exemple non limitatif, une forme d'exécution de la présente invention, en référence au dessin annexé sur lequel :
- la figure 1 est une vue en coupe transversale d'un vitrage suivant l'invention,
- les figures 2 et 3 sont des diagrammes température et pression en fonction du temps montrant les profils de chauffage/refroidissement ainsi que les profils dépression/remontée à pression ambiante de deux modes de mise en oeuvre de l'invention utilisant l'EVA en tant qu'intercalaire de feuilletage,
- la figure 6 est une vue en coupe transversale représentant une variante du vitrage suivant l'invention représentée figure 1.

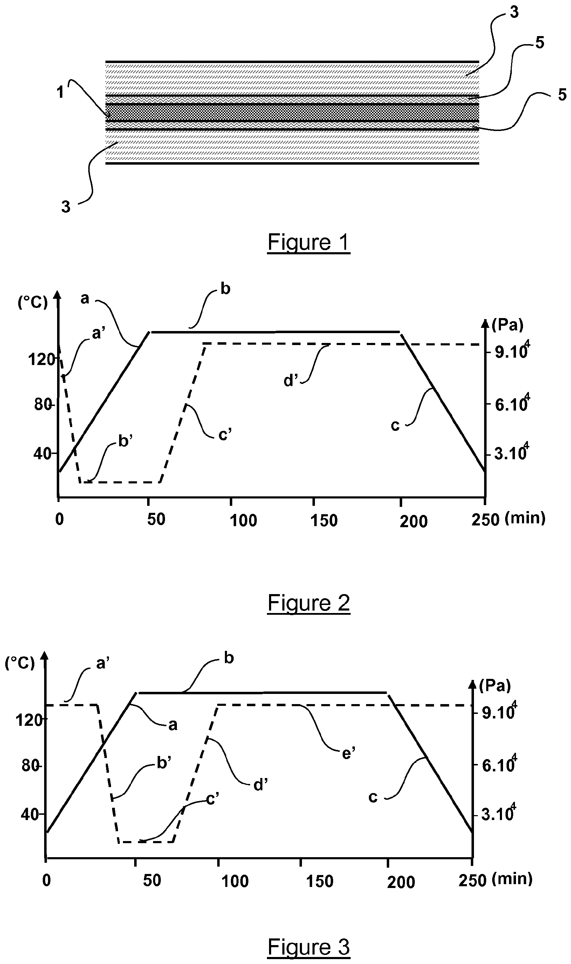

Dans un premier mode de mise en oeuvre de la présente invention et ainsi que représenté sur la figure 1, on souhaite réaliser l'encapsulage d'un matériau textile 1 de type 3D entre deux substrats verriers 3. On fait appel pour ce faire à deux feuilles intercalaires 5 constituées d'ethylènevinylacétate, dites ci-après EVA.

De façon connue on dispose le sandwich constitué du matériau textile 3D 1 entre les deux feuilles 5 du matériau intercalaire 5 en EVA qui est lui-même disposé entre les deux substrats verriers 3, dans une enceinte dans laquelle on est en mesure de contrôler les conditions de température et de pression.

On a représenté sur la figure 2 le profil de pression (courbe en traits pointillés)/température (courbe en traits pleins) que l'on applique à l'assemblage en fonction du temps au cours d'un cycle de fabrication.

Dans une première phase a du procédé on chauffe l'assemblage avec une pente de température de l'ordre de 2,7°C/min jusqu'à atteindre la température de réticulation du matériau intercalaire 5 qui se produit vers 130 °C. Ensuite, dans une phase b, on maintient cette température pendant environ 150 min, puis on laisse refroidir, dans une phase c, jusqu'à la température ambiante avec une pente de refroidissement voisine de celle de montée en température.

Pendant la phase de chauffage a on diminue progressivement la pression, au cours d'une phase a', à l'intérieur de l'enceinte, de façon à éliminer les produits de dégazage du matériau intercalaire jusqu'à atteindre une pression de l'ordre de 10⁴ Pa avec une pente de l'ordre de 0,8.10⁴ Pa/min. On maintient ensuite, au cours d'une phase b', cette pression pendant sensiblement la phase a de montée en température, puis on augmente progressivement la pression, au cours d'une phase c', avec une pente voisine de la précédente jusqu'à atteindre la pression atmosphérique. Puis on maintient cette pression, au cours d'une phase d', jusqu'à la fin du cycle soit environ 250 min.

On a constaté qu'un tel profil de température et de pression permettait à la fois d'éliminer la totalité des produits de dégazage du matériau intercalaire et donc d'éviter la formation de bulles gazeuse dans le produit, tout en évitant d'écraser le matériau textile 1 qui conserve ainsi toutes ses qualités esthétiques.

Dans un autre mode de mise en oeuvre de l'invention on met en oeuvre un profil pression/température en fonction du temps qui est représenté sur la figure 3.

Suivant ce profil, la caractéristique des températures reste inchangée. En ce qui concerne le profil des pressions, on attend dans une phase a' d'environ la moitié du temps de montée en température (phase a) soit 25 min avant de baisser progressivement la pression à l'intérieur de l'enceinte dans une phase b' et de mettre en oeuvre un profil des températures égal par ailleurs au profil précédent.

On a constaté qu'un tel profil pression/température permettait également d'obtenir une bonne élimination des produits de dégazage et un non écrasement du matériau textile 1.

Il est ainsi essentiel suivant l'invention de créer une dépression en mesure d'aspirer les produits de dégazage pendant au moins une partie de la phase de montée en température du produit.

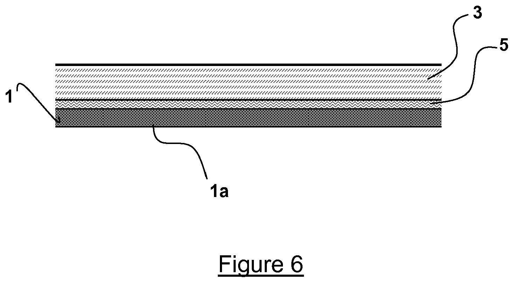

Dans une variante de mise en oeuvre de l'invention représentée sur la figure 6, le vitrage ne comportera qu'un substrat verrier extérieur 3, si bien que l'une des faces la du matériau textile 1 se trouvera à l'air libre. Un tel mode de mise en oeuvre de l'invention est intéressant en ce qu'il permet, tout en protégeant l'une des faces de celui-ci, de fournir un accès visuel et tactile direct à son autre face.

Le substrat verrier 3 peut bien entendu être de diverses natures et être notamment constitué de verre clair, de verre à couche, de verre teinté, de verre miroir etc...

## Revendications

1. Procédé de fabrication d'un vitrage de type feuilleté comportant une âme (1) dont au moins l'une des faces est liée à un substrat verrier (3) par un intercalaire de feuilletage (5) constitué d'un EVA, **caractérisé en ce qu'**il comporte :
- une étape d'assemblage d'un ensemble constitué dudit substrat verrier et dudit intercalaire de feuilletage sur une âme constituée d'un revêtement textile de type 3D,
- une étape formée de plusieurs phases comprenant une phase de chauffage, une phase de maintien en température, et une phase de refroidissement dudit ensemble et, simultanément, une phase de mise en dépression, une phase de maintien en dépression et une phase de remise à la pression ambiante suivant un profil température/pression spécifique tel que la mise en dépression s'effectue pendant au moins une partie de la phase de chauffage,
- et **en ce que** la phase de chauffage est assurée avec une pente de montée en température de l'ordre de 2,7°C/min.

2. Procédé de fabrication d'un vitrage suivant la revendication 1 **caractérisé en ce que** la phase de maintien en température s'effectue entre 100°C et 140°C et préférentiellement aux environs de 130°C.

3. Procédé de fabrication d'un vitrage suivant l'une des revendications 1 ou 2 **caractérisé en ce que** la phase de refroidissement est assurée avec une pente de descente en température de l'ordre de 2,7°C/min.

4. Procédé de fabrication d'un vitrage suivant l'une des revendications 1 à 3 **caractérisé en ce que** la phase de mise en dépression est assurée avec une pente de descente en pression de l'ordre de 0,8.10⁴ Pa/min.

5. Procédé de fabrication d'un vitrage suivant l'une des revendications 1 à 4 **caractérisé en ce que** la phase de maintien en dépression s'effectue entre 0,5.10⁴ Pa et 2.10⁴ Pa et préférentiellement aux environs de 10⁴ Pa.

6. Procédé de fabrication d'un vitrage suivant l'une des revendications 1 à 5 **caractérisé en ce que** la phase de remontée à la pression ambiante est assurée avec une pente de l'ordre de 0,8.10⁴ Pa/min.

7. Procédé de fabrication d'un vitrage suivant l'une des revendications 1 à 6 **caractérisé en ce que** la phase de mise en dépression commence simultanément à la phase de chauffage.

8. Procédé de fabrication d'un vitrage suivant la revendication 7 **caractérisé en ce que** la phase de remontée à la pression ambiante commence à la fin de la phase de chauffage.

9. Procédé de fabrication d'un vitrage suivant l'une des revendications 1 à 6 **caractérisé en ce que** la phase de mise en dépression commence sensiblement au milieu de la phase de chauffage.

## Patentansprüche

1. Verfahren zur Herstellung einer Verglasung des Typs der Verbundglasscheibe, umfassend einen Kern (1), wovon mindestens eine der Seiten mit einem Glassubstrat (3) durch eine Laminatzwischenschicht (5), die aus einem EVA besteht, verbunden ist, **dadurch gekennzeichnet, dass** es aufweist:
- einen Schritt des Zusammenbauens einer Anordnung, die aus dem Glassubstrat und der Laminatzwischenschicht besteht, auf einem Kern, der aus einer Textilbeschichtung des Typs der 3D-Beschichtung besteht,
- einen Schritt, der aus mehreren Phasen gebildet ist, umfassend eine Heizphase, eine Temperaturerhaltungsphase und eine Abkühlphase der Anordnung und gleichzeitig eine Phase zum unter Unterdruck Setzen, eine Phase zum Aufrechterhalten des Unterdrucks und eine Phase zum Rücksetzen auf Umgebungsdruck gemäß einem spezifischen Temperatur-/Druckprofil, derart, dass das unter Unterdruck Setzen während mindestens eines Teils der Aufheizphase durchgeführt wird,
- und dadurch, dass die Aufheizphase mit einer Temperaturanstiegsneigung in der Größenordnung von 2,7 °C/min gewährleistet wird.

2. Verfahren zur Herstellung einer Verglasung nach Anspruch 1, **dadurch gekennzeichnet, dass** die Temperaturerhaltungsphase zwischen 100 °C und 140 °C und vorzugsweise bei etwa 130 °C durchgeführt wird.

3. Verfahren zur Herstellung einer Verglasung nach einem der Ansprüche 1 oder 2, **dadurch gekennzeichnet, dass** die Abkühlphase mit einer Temperaturabstiegsneigung in der Größenordnung von 2,7 °C/min gewährleistet wird.

4. Verfahren zur Herstellung einer Verglasung nach einem der Ansprüche 1 bis 3, **dadurch gekennzeichnet, dass** die Phase zum unter Unterdruck Setzen mit einer Druckabstiegsneigung in der Größenordnung von 0,8.10⁴Pa/min gewährleistet wird.

5. Verfahren zur Herstellung einer Verglasung nach einem der Ansprüche 1 bis 4, **dadurch gekennzeichnet, dass** die Phase zum Aufrechterhalten des Unterdrucks zwischen 0,5.10⁴ Pa und 2.10⁴ Pa und vorzugsweise bei etwa 10⁴ Pa durchgeführt wird.

6. Verfahren zur Herstellung einer Verglasung nach einem der Ansprüche 1 bis 5, **dadurch gekennzeichnet, dass** die Phase zum Rücksetzen auf Umgebungsdruck mit einer Neigung in der Größenordnung von 0,8.10⁴ Pa/min gewährleistet wird.

7. Verfahren zur Herstellung einer Verglasung nach einem der Ansprüche 1 bis 6, **dadurch gekennzeichnet, dass** die Phase zum unter Unterdruck Setzen gleichzeitig mit der Heizphase beginnt.

8. Verfahren zur Herstellung einer Verglasung nach Anspruch 7, **dadurch gekennzeichnet, dass** die Phase zum Rücksetzen auf Umgebungsdruck am Ende der Heizphase beginnt.

9. Verfahren zur Herstellung einer Verglasung nach einem der Ansprüche 1 bis 6, **dadurch gekennzeichnet, dass** die Phase zum unter Unterdruck Setzen im Wesentlichen in der Mitte der Heizphase beginnt.

## Claims

1. Process for manufacturing a laminated glazing unit comprising a core (1) at least one of the faces of which is joined to a glazing substrate (3) by a lamination interlayer (5) made of EVA, **characterized in that** it comprises:
- a step of joining an assembly consisting of said glazing substrate and said lamination interlayer to a core consisting of a 3D textile coating; and
- a step formed from a plurality of phases comprising a heating phase, a temperature maintenance phase and a phase of cooling said assembly and, simultaneously, a phase of applying a vacuum, a vacuum maintenance phase and a phase of returning said assembly to ambient pressure following a specific temperature/pressure profile such that the vacuum is applied during at least part of the heating phase, - and **in that** the heating phase is implemented with an upward temperature slope of about 2.7°C/min.

2. Process for manufacturing a glazing unit according to Claim 2, **characterized in that** the temperature maintenance phase is carried out between 100°C and 140°C and preferably at about 130°C.

3. Process for manufacturing a glazing unit according to either of Claims 1 and 2, **characterized in that** the cooling phase is implemented with a downward temperature slope of about 2.7°C/min.

4. Process for manufacturing a glazing unit according to one of Claims 1 to 3, **characterized in that** the phase of applying a vacuum is implemented with a downward pressure slope of about 0.8×10⁴ Pa/min.

5. Process for manufacturing a glazing unit according to one of Claims 1 to 4, **characterized in that** the vacuum maintenance phase is carried out between 0.5×10⁴ Pa and 2×10⁴ Pa and preferably at about 1×10⁴ Pa.

6. Process for manufacturing a glazing unit according to one of Claims 1 to 5, **characterized in that** the phase of returning to ambient pressure is implemented with a slope of about 0.8×10⁴ Pa/min.

7. Process for manufacturing a glazing unit according to one of Claims 1 to 6, **characterized in that** the phase of applying a vacuum starts at the same time as the heating phase.

8. Process for manufacturing a glazing unit according to Claim 7, **characterized in that** the phase of returning to ambient pressure starts at the end of the heating phase.

9. Process for manufacturing a glazing unit according to one of Claims 1 to 6, **characterized in that** the phase of applying a vacuum starts substantially in the middle of the heating phase.
